(19) Europäisches Patentamt
European Patent Office
Office européen des brevets

(11) EP 4 650 375 A1

(12) EUROPEAN PATENT APPLICATION
published in accordance with Art. 153(4) EPC

(43) Date of publication:
19.11.2025 Bulletin 2025/47

(21) Application number: 23916264.7

(22) Date of filing: 25.12.2023

(51) International Patent Classification (IPC):
*C08F 8/28* *(2006.01)* *C08F 16/06* *(2006.01)*
*C08F 16/38* *(2006.01)* *C09J 129/14* *(2006.01)*
*C09K 23/52* *(2022.01)*

(52) Cooperative Patent Classification (CPC):
**C08F 8/28; C08F 16/06; C08F 16/38; C09J 129/14; C09K 23/52**

(86) International application number:
**PCT/JP2023/046332**

(87) International publication number:
**WO 2024/150650 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2023 JP 2023002021**

(71) Applicant: **Japan Vam & Poval Co., Ltd.**
**Sakai-shi, Osaka 592-8331 (JP)**

(72) Inventor: **OMORI, Takehiro**
**Sakai-shi, Osaka 592-8331 (JP)**

(74) Representative: **Kraus & Lederer PartGmbB**
**Thomas-Wimmer-Ring 15**
**80539 München (DE)**

# (54) POLYVINYL ALCOHOL POLYMER AND METHOD FOR PRODUCING THE SAME

(57) A polyvinyl alcohol-based polymer and others are provided. The polyvinyl alcohol-based polymer has an acetal skeleton having an ionic group and satisfies at least one requirement selected from the following (1), (2) and (3): (1) a 4% by mass solution of the polyvinyl alcohol-based polymer in dimethyl sulfoxide has a YI value of 10 or less, (2) a 4% by mass aqueous solution of the polyvinyl alcohol-based polymer has a transparency of 2% or more at 430 nm at 20°C, and (3) the polyvinyl alcohol-based polymer has a water-insoluble fraction of 20% by mass or less.

EP 4 650 375 A1

## Description

TECHNICAL FIELD

The present invention relates to a polyvinyl alcohol-based polymer having an acetal skeleton having an ionic group, a production method thereof, and others.

BACKGROUND ART

Polyvinyl alcohol-based polymers having an ionic group (hereinafter, a polyvinyl alcohol-based polymer or a vinyl alcohol-based polymer may be abbreviated as a "PVA", a "PVA-based polymer", etc.) are often different from PVAs that lack an ionic group in terms of physical properties or other properties due to the presence of the ionic group. For example, PVAs having an ionic group have greatly improved hydrophilicity.

Such PVAs having an ionic group are suitable for, for example, use in water-soluble films, which require a significantly high dissolution rate in water. PVAs having an ionic group also can impart water dispersibility or water solubility to substantially non-water-soluble PVAs with a low degree of saponification (e.g., a degree of saponification of 70 mol% or less). When water solubility or water dispersibility is imparted to PVAs with a low degree of saponification, the resulting PVAs can be used for various applications including water-soluble hot melt adhesives, etc.

For example, Patent Literature 1 discloses a modified vinyl alcohol-based polymer comprising a sulfonic acid group or a salt thereof on its side chain, wherein a degree of modification with the sulfonic acid group or a salt thereof is from 0.01 mol% to 10 mol%, and wherein a block character of residual vinyl ester units is from 0.55 to 1. Patent Literature 1 also discloses a production method of the modified vinyl alcohol-based polymer.

CITATION LIST

PATENT LITERATURE

Patent Literature 1: WO 2019/159757

SUMMARY OF INVENTION

TECHNICAL PROBLEM

An object of the present invention is to provide a polyvinyl alcohol (PVA)-based polymer and others.

SOLUTION TO PROBLEM

Various PVAs (modified PVAs) having an ionic group including those described in Patent Literature 1 are known as described above. However, investigations by the present inventors revealed that PVAs having an ionic group may cause several problems. For example, PVAs having an ionic group are prone to color development, tend to form water-insoluble matter (as a by-product), and sometimes, instead of being water soluble, may become insoluble in water.

A search for PVAs that have an ionic group but are less prone to color development and contain a small amount of water-insoluble matter (i.e., excellent water dispersibility and water solubility) has been a great challenge.

For example, according to Patent Literature 1, a PVA is mixed with an aldehyde having a sulfonic acid group or a salt thereof and reacted together under heating to introduce an ionic group into the PVA. However, according to investigations by the present inventors, the amount of water-insoluble matter may increase depending on the reaction conditions and the characteristics of the PVA used in the reaction, including the degrees of polymerization and saponification, the particle size, etc. probably due to non-uniform or insufficient mixing, which may increase the unevenness of the reactivity. When heating is performed under conditions that allow for complete melting of a PVA to achieve uniform mixing, the resulting PVA is prone to color development and becomes insoluble.

Under these circumstances, the present inventors found that color development and water-insoluble matter are efficiently reduced, and further, the generation of an insoluble PVA is efficiently inhibited or prevented by selecting, among other PVAs having an ionic group, a PVA having an ionic group that is introduced in the form of an acetal skeleton (an acetal group or an acetal unit) having an ionic group and by selecting the reaction conditions for introducing the acetal skeleton and other parameters. The present inventors also found, among others, that the PVA is not required to have a high degree of saponification like complete saponification to efficiently reduce color development or water-insoluble matter and further inhibit or prevent the generation of an insoluble PVA. The inventors carried out further studies and completed the present invention.

Thus, the present invention relates to the following and others.

[1] A polyvinyl alcohol-based polymer (A) having an acetal skeleton having an ionic group, wherein a 4% by mass solution of the polyvinyl alcohol-based polymer (A) in dimethyl sulfoxide has a YI value of 10 or less.

[2] A polyvinyl alcohol-based polymer (A) having an acetal skeleton having an ionic group, wherein a 4% by mass aqueous solution of the polyvinyl alcohol-based polymer (A) has a transparency of 2% or more at 430 nm at 20°C, and/or wherein the polyvinyl alcohol-based polymer (A) has a water-insoluble fraction of 20% by mass or less (in particular, a polyvinyl alcohol-based polymer (A) having a low degree of saponification, for example, a degree of saponification of 70 mol% or less).

[3] A polyvinyl alcohol-based polymer (A) having an acetal skeleton having an ionic group, wherein a 4% by mass solution of the polyvinyl alcohol-based polymer (A) in dimethyl sulfoxide has a YI value of 10 or less, wherein a 4% by mass aqueous solution of the polyvinyl alcohol-based polymer (A) has a transparency of 2% or more at 430 nm at 20°C, and/or wherein the polyvinyl alcohol-based polymer (A) has a water-insoluble fraction of 20% by mass or less.

[4] The polyvinyl alcohol-based polymer (A) according to any one of the above [1] to [3], wherein the acetal skeleton having an ionic group comprises a skeleton represented by the following formula (1):

[Chem. 1]

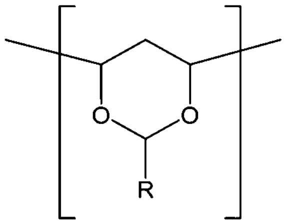

(1)

wherein R is a group having an ionic group.

[5] The polyvinyl alcohol-based polymer (A) according to any one of the above [1] to [4], wherein the acetal skeleton having an ionic group comprises a skeleton represented by the formula (1) wherein R is a hydrocarbon group having an ionic group.

[6] The polyvinyl alcohol-based polymer (A) according to any one of the above [1] to [5], wherein the acetal skeleton having an ionic group comprises at least one skeleton selected from a skeleton represented by the formula (1) wherein R is an ionic group and a skeleton represented by the following formula (1-1):

[Chem. 2]

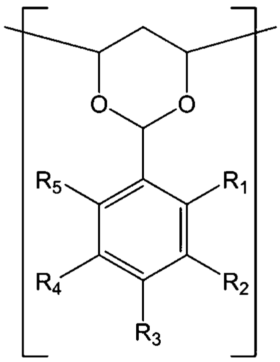

(1-1)

wherein $R_1$ to $R_5$ each represent a hydrogen atom or a substituent, wherein at least one of $R_1$ to $R_5$ is an ionic group.

[7] The polyvinyl alcohol-based polymer (A) according to any one of the above [1] to [6], wherein the ionic group comprises at least one selected from acid groups and salts thereof.

[8] The polyvinyl alcohol-based polymer (A) according to any one of the above [1] to [7], wherein the acetal skeleton having an ionic group comprises a skeleton derived from at least one selected from glyoxylic acid, 4-formylbenzoic acid, 2-formylbenzenesulfonic acid, and salts thereof.

[9] The polyvinyl alcohol-based polymer (A) according to any one of the above [1] to [8], wherein the acetal skeleton having an ionic group is contained in an amount of 0.01 to 10 mol% per monomer unit.

[10] The polyvinyl alcohol-based polymer (A) according to any one of the above [1] to [9], wherein the polyvinyl alcohol-based polymer (A) has a block character (a block character of residual vinyl ester units) of 0.35 or more and less than 0.55.

[11] The polyvinyl alcohol-based polymer (A) according to any one of the above [1] to [10], wherein the polyvinyl alcohol-based polymer (A) has a degree of saponification of 20 to 90 mol%.

[12] The polyvinyl alcohol-based polymer (A) according to any one of the above [1] to [11], wherein the polyvinyl alcohol-based polymer (A) has a degree of saponification of 70 mol% or less.

[13] The polyvinyl alcohol-based polymer (A) according to any one of the above [1] to [12], wherein the polyvinyl alcohol-based polymer (A) has a degree of polymerization of 120 to 3000.

[14] The polyvinyl alcohol-based polymer (A) according to any one of the above [1] to [13], wherein a 4% by mass aqueous solution of the polyvinyl alcohol-based polymer (A) has a transparency of 40% or more at 430 nm at 20°C.

[15] The polyvinyl alcohol-based polymer (A) according to any one of the above [1] to [14], wherein the polyvinyl alcohol-based polymer (A) has a water-insoluble fraction of 5% by mass or less.

[16] A method for producing a polyvinyl alcohol-based polymer (A) having an acetal skeleton having an ionic group, the method comprising a heating step comprising heating a composition (for example, in a solid form or a molten state) comprising a polyvinyl alcohol-based polymer (B) and a carbonyl compound having an ionic group (or a heating step comprising heating a polyvinyl alcohol-based polymer (B) in the presence of a carbonyl compound having an ionic group (or a heating step comprising heating a polyvinyl alcohol-based polymer (B) together with a carbonyl compound having an ionic group)).

[17] The production method according to the above [16], wherein the method further comprises a solvent-removal step comprising, from a composition (or a composition in a solvent, a composition in a solution form, or a solution) comprising a polyvinyl alcohol-based polymer (B), a carbonyl compound having an ionic group and a solvent, removing the solvent,

wherein the heating step is performed after the solvent-removal step (for example, after the composition obtained in the solvent-removal step is collected, the heating step is performed on the composition separately from the solvent-removal step), or the heating step is performed in parallel with the solvent-removal step or successively to the solvent-removal step (for example, after the composition is obtained in the solvent-removal step, the heating step is performed on the composition directly in the system in which the solvent-removal step is performed (the heating step is performed in parallel with the solvent-removal step or successively to the solvent-removal step directly in the system in which the solvent-removal step is performed)).

[18] The production method according to the above [16] or [17], wherein the composition further comprises at least one selected from phosphoric acid, a hydrogen phosphate salt, and acetic acid (or the heating step (and the solvent-removal step) is performed in the presence of at least one selected from phosphoric acid, a hydrogen phosphate salt, and acetic acid).

[19] The production method according to the above [16] or [17], wherein the composition further comprises at least one selected from phosphoric acid, a hydrogen phosphate salt, and acetic acid in an amount of 0.005 to 0.3 mol% per monomer unit of the polyvinyl alcohol-based polymer (B).

[20] The production method according to any one of the above [16] to [19], wherein the heating step is performed at a heating temperature of 80 to 240°C.

[21] The production method according to any one of the above [16] to [20], wherein the heating step is performed for a heating time of 5 minutes to 5 hours.

[22] The production method according to any one of the above [17] to [21], wherein the solvent comprises at least one selected from water, an alcohol (such as an alkanol, a lower alcohol, ethanol, etc.), and an ester.

[23] The production method according to any one of the above [17] to [22], wherein the solvent comprises methanol (for example, comprises methanol alone, or comprises methanol and water and/or methyl acetate).

[24] The production method according to any one of the above [16] to [23], wherein the polyvinyl alcohol-based polymer (A) satisfies at least one requirement selected from the following (1), (2) and (3):

(1) a 4% by mass solution of the polyvinyl alcohol-based polymer (A) in dimethyl sulfoxide has a YI value of 10 or less,
(2) a 4% by mass aqueous solution of the polyvinyl alcohol-based polymer (A) has a transparency of 2% or more at 430 nm at 20°C, and
(3) the polyvinyl alcohol-based polymer (A) has a water-insoluble fraction of 20% by mass or less.

[25] A hot melt adhesive comprising the polyvinyl alcohol-based polymer (A) according to any one of the above [1] to [15].

[26] A dispersing agent for suspension polymerization, comprising the polyvinyl alcohol-based polymer (A) according to any one of the above [1] to [15].

[27] Use of the polyvinyl alcohol-based polymer (A) according to any one of the above [1] to [15] for a hot melt adhesive.

[28] Use of the polyvinyl alcohol-based polymer (A) according to any one of the above [1] to [15] for a dispersion stabilizing agent (a dispersing agent).

[29] The use according to the above [28], wherein the dispersion stabilizing agent is a dispersion stabilizing agent for suspension polymerization.

[30] The use according to the above [28] or [29], wherein the dispersion stabilizing agent is a dispersion stabilizing agent for suspension polymerization of a vinyl-based monomer containing vinyl chloride.

[31] Use of the polyvinyl alcohol-based polymer (A) according to any one of the above [1] to [15] in polymerization of a vinyl-based monomer.

[32] The use according to the above [31], wherein the polymerization is suspension polymerization.

[33] The use according to the above [31] or [32], wherein the polymerization is suspension polymerization of a vinyl-based monomer containing vinyl chloride.

## ADVANTAGEOUS EFFECTS OF INVENTION

The present invention provides a PVA (a novel PVA or a specific PVA), and use thereof, such as use as a hot melt adhesive, a dispersion aid, etc.

In an embodiment, the PVA has a certain hue (color development characteristics) while having an ionic group.

In an embodiment, the PVA of the present invention contains a small amount of water-insoluble matter and/or exhibits high transparency when prepared as an aqueous solution while having an ionic group. These physical properties can serve as a measure indicating the homogeneity of the PVA, in particular, the homogeneous introduction of ionic groups into the PVA (small unevenness of the reactivity). When the PVA has the physical properties, the PVA efficiently exhibits its functions (e.g., water solubility or water dispersibility).

In an embodiment of the PVA of the present invention, the PVA can achieve a specific hue (color development characteristics) and, at the same time, achieve a small amount of water-insoluble matter and/or high transparency of an aqueous solution, while having an ionic group.

Therefore, the PVA of the present invention has the characteristics attributed to an ionic group (in particular, water solubility or dispersibility), and at the same time, achieves the inhibition of color development and the efficient exhibition of its characteristics.

In particular, in an embodiment of the PVA of the present invention, the PVA achieves the inhibition of color development and the efficient exhibition of its characteristics as described above even when the PVA does not have a high degree of saponification, such as complete saponification (for example, even when the PVA has a degree of saponification of 90 mol% or less, or even when the PVA has a degree of saponification at which a PVA is usually insoluble (non-dispersible) in water or less soluble (less dispersible) in water, e.g., a degree of saponification of 70 mol% or less).

In an embodiment, the present invention provides a method for producing the PVA. The production method of the present invention easily and efficiently produces the PVA exhibiting the characteristics described above while having an ionic group (e.g., a PVA in which color development is inhibited or a PVA efficiently exhibiting water solubility or dispersibility).

## DESCRIPTION OF EMBODIMENTS

Embodiments of the present invention will be described in detail below. The present invention is not limited to the embodiments described below.

The present invention provides a specific polyvinyl alcohol-based polymer, i.e., a polyvinyl alcohol-based polymer (A) (hereinafter may also be referred to as the PVA-based polymer (A), the PVA (A), or the like).

The present invention will be described in detail below.

### Polyvinyl alcohol-based polymer (A)

The PVA-based polymer (A) has an acetal skeleton (an acetal group, or an acetal unit) having an ionic group.

Examples of the ionic group include anionic groups, such as acid groups, e.g., a carboxyl group, a sulfonic acid group ($-SO_3H$), or a phosphoric acid group; cationic groups, such as an amino group, or ammonium (an ammonium cation); and salts thereof (salt groups formed from these groups).

Examples of the salts, although depending on whether the ionic group is anionic or cationic or other properties, include, metal salts including alkali metal salts and alkaline earth metal salts, such as lithium salts, sodium salts, potassium salts, magnesium salts, calcium salts; halides, such as chlorides, bromides, and iodides; and the like.

When the ionic group is a polybasic acid or the like, the salts may be a single type (the same type) or a combination of two or more types.

Among these ionic groups, preferred are acid groups, in particular, a carboxyl group and a sulfonic acid group, and salts thereof, in particular, salts of acid groups, such as carboxylic acid salts, such as -COOM, where M is an alkali metal such as sodium or a cation thereof, or sulfonic acid salt, such as $-SO_3M$, where M is an alkali metal such as sodium or a cation thereof.

An ionic group is present in the acetal skeleton (or the acetal group, or the acetal unit) as described above (i.e., the ionic group is a substituent on the acetal skeleton).

The acetal moiety may be a cyclic acetal or an acyclic (linear) acetal, and may preferably be a cyclic acetal.

An exemplary acetal skeleton having an ionic group includes a skeleton (structural unit) represented by the formula (1) shown below. The acetal skeleton having an ionic group thus may include a skeleton represented by the formula (1) shown below.

[Chem. 3]

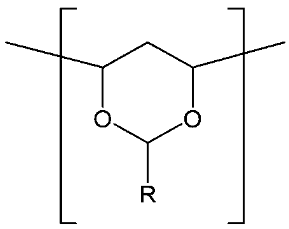

(1)

wherein R is a group having an ionic group.

In the above formula (1), R is a group having an ionic group. R itself may be an ionic group, or R may be a linking group having an ionic group, i.e., a group composed of an ionic group and a linking group substituted with the ionic group.

Examples of the linking group (i.e., a group substituted with the ionic group) include hydrocarbon groups. Examples of the hydrocarbon groups include aliphatic hydrocarbon groups including saturated aliphatic hydrocarbon groups such as alkyl groups, including linear alkyl groups, e.g., $C_{1-30}$ alky groups, such as a methyl, ethyl, propyl, butyl, pentyl, hexyl, heptyl, octyl, nonyl, decyl, or undecyl group, and cycloalkyl groups, e.g., $C_{3-10}$ cycloalkyl groups, such as a cyclopentyl or cyclohexyl group; and aromatic hydrocarbon groups including aryl groups, e.g., $C_{6-20}$ aryl groups, such as a phenyl, tolyl, xylyl, or naphthyl group, and aralkyl groups, e.g., $C_{6-20}$ aryl $C_{1-4}$ alkyl groups, such as a benzyl or phenethyl group); etc.

The linking group (such as a hydrocarbon group) may have a substituent (other than an ionic group) in addition to the ionic group. Examples of the substituent include, but are not limited to, a hydroxy group, a halogen atom, an acyl group, an ester group, an alkoxy group, a nitro group, a group different from a group from which the linking group is derived (e.g., an aromatic group such as an aryl group), etc.

The substituent on the linking group (such as a hydrocarbon group) may be a single type or a combination of two or more types.

The number of ionic groups present in the linking group (such as a hydrocarbon group) having an ionic group is at least one, and two or more ionic groups may be present in the linking group.

Specific examples of the acetal skeleton having an ionic group, i.e., a skeleton represented by the formula (1), include a skeleton represented by the formula (1) in which R is an ionic group, e.g., a carboxyl group or a salt thereof, a skeleton represented by the formula (1-1) shown below, and others.

[Chem. 4]

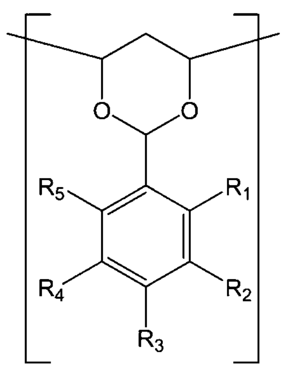

(1-1)

wherein $R_1$ to $R_5$ each represent a hydrogen atom or a substituent, wherein at least one of $R_1$ to $R_5$ is an ionic group.

The ionic group and the substituent present in the formula (1-1) may be any one of those exemplified above. At least one of $R_1$ to $R_5$ is an ionic group, and preferably one of $R_1$ to $R_5$ may be an ionic group. Typically, any one of $R_1$ to $R_5$ may be an ionic group (e.g., a carboxyl group, a sulfonic acid group, or a salt thereof) and the remaining four substituents may be hydrogen atoms.

The acetal skeleton having an ionic group, for example, a group represented by the formula (1) or represented by R'-< in the formula (1), may be derived from a corresponding carbonyl compound, such as an aldehyde, an acetal thereof, a ketone, or the like, in particular, an aldehyde, such as RCHO. The carbonyl compound may have a substituent.

Examples of such a carbonyl compound include aldehydes (in particular, monoaldehydes) including alkanals having an ionic group, e.g., alkanals having an acid group or a salt thereof, such as glyoxylic acid, formyl acetate, formyl propionate, or salts thereof; arene carboxaldehydes having an ionic group, e.g., arene carboxaldehydes having an acid group or a salt thereof, such as formylbenzoic acid (such as 4-formylbenzoic acid), formylbenzenesulfonic acid (such as 2-formylbenzenesulfonic acid or 4-formylbenzene-1,3-disulfonic acid), or salts thereof; and corresponding ketones, acetals, or the like.

When the carbonyl compound can exist as isomers, e.g., cis and trans isomers, the carbonyl compound includes any isomers, e.g., cis and trans isomers.

When an ionic group can be formed in the PVA-based polymer (A), the ionic group present in the carbonyl compound may be derivatized (e.g., modified by esterification or anhydration).

For example, an ester (e.g., an alkyl ester) or an acid anhydride can be used when the ester or the acid anhydride can produce the corresponding acid group (the corresponding carboxyl or sulfonic acid group) or a salt thereof via, e.g., hydrolysis in the PVA-based polymer (A) (hereinafter, the same applies to an ionic group).

The carbonyl compound may be a single type or a combination of two or more types.

The carbonyl compound may preferably be a monocarbonyl compound, such as a monoaldehyde, to achieve appropriate water solubility and other properties. When a polyvalent carbonyl compound, such as a polyvalent aldehyde, such as a dialdehyde, is used, the polyvalent carbonyl compound is used in such an amount that sufficient water solubility or other properties can be ensured. For example, the polyvalent carbonyl compound is used in a reduced amount.

The acetal skeleton having an ionic group, for example, an acetal skeleton represented by the formula (1), may be a skeleton that can be introduced via a hydroxy group, and may be, for example, an acetal skeleton derived from (introduced via) two adjacent hydroxy groups, for example, hydroxy groups of vinyl alcohol units.

For example, when a carbonyl compound (such as an aldehyde or a ketone) having an ionic group is used, two adjacent OH groups in a PVA-based polymer can be acetalized with the carbonyl compound having an ionic group to give a PVA-based polymer (A) having the acetal skeleton having an ionic group.

The PVA-based polymer (A) may have a single type of acetal skeleton having an ionic group or a combination of two or more types of acetal skeletons having an ionic group.

The amount (percentage, or percentage of the amount) of the acetal skeleton having an ionic group (e.g., a skeleton represented by the formula (1) or a skeleton represented by the formula (1-1)) in the PVA-based polymer (A) may be selected from the range of about 0.001 mol% or more, e.g., 0.005 mol% or more, per monomer unit, and may be, for example, 0.01 mol% or more, preferably 0.05 mol% or more, and more preferably 0.1 mol% or more, etc. per monomer unit, and may be 15 mol% or less, e.g., 10 mol% or less, preferably 5 mol% or less, and more preferably 2 mol% or less per monomer unit.

The range of the amount may be selected from appropriate combinations of these ranges (the upper and lower limits) and may be, for example, 0.01 to 3 mol%, 0.03 to 5 mol%, or the like. Hereinafter, the same applies to the definition of ranges.

Specifically, the amount of the acetal skeleton having an ionic group contained in the PVA-based polymer (A) may be about 0.01 to 10 mol%, preferably about 0.05 to 5 mol%, and more preferably about 0.1 to 2 mol% per monomer unit.

The amount "1 mol%" means that one acetal skeleton having an ionic group (e.g., a skeleton represented by the formula (1) or a skeleton represented by the formula (1-1)) is contained in 100 monomer units (e.g., of the total of monomer units, such as vinyl alcohol units or vinyl ester units).

When the amount of the acetal skeleton having an ionic group is in the amount described above, the hydrophilicity of the PVA-based polymer (A) can be easily and efficiently improved. In particular, when the amount of the acetal skeleton having an ionic group is in the amount described above, water solubility (water dispersibility) can be easily and efficiently imparted to the PVA even when the PVA has a degree of saponification at which a PVA is usually insoluble (non-dispersible) in water, e.g., a degree of saponification of 70 mol% or less.

The upper limit of the amount of the acetal skeleton having an ionic group should not be excessively high so that color development (e.g., color development by an aldehyde etc.) is much more efficiently inhibited.

The amount of the acetal skeleton having an ionic group (e.g., a skeleton represented by the formula (1) or a skeleton represented by the formula (1-1)) contained in the PVA-based polymer (A) can be measured by any method, and can be measured using, for example, NMR, titration, UV absorption, or the like.

Specifically, for example, the amount of a skeleton represented by the formula (1-1) contained in the PVA-based polymer (A) may be measured by dissolving the PVA-based polymer (A) in an appropriate solvent (such as d6-DMSO), then subjecting the solution to measurement by $^1$H-NMR, and analyzing a signal derived from a substituent (e.g., hydrogen) on the benzene ring.

Alternatively, the amount of carboxyl groups in the PVA-based polymer (A) can be determined by completely saponifying the PVA-based polymer (A), if necessary, subjecting the saponified PVA-based polymer (A) to Soxhlet extraction to remove, for example, sodium acetate, dissolving the extracted sample in water, adding a small amount of sodium hydroxide (NaOH), and subjecting the sample to conductometric titration with diluted hydrochloric acid to measure the amount of hydrochloric acid used for the titration.

When the acetal skeleton having an ionic group absorbs UV (ultraviolet rays), the amount of the acetal skeleton having an ionic group contained in the PVA-based polymer (A) can be determined by measuring the UV absorbance of an aqueous solution containing the PVA-based polymer (A).

The method for adding (or introducing) the acetal skeleton having an ionic group, such as the acetal skeleton having a carboxyl group, a sulfonic acid group or a salt thereof to the PVA-based polymer (A), is not limited to a particular one and may be performed by a conventional procedure.

In a typical method, a PVA-based polymer (B) may be acetalized with a carbonyl compound having an ionic group, such as an aldehyde, an acetal thereof, a ketone, or the like having an ionic group, as described later.

Examples of the aldehyde having an ionic group include glyoxylic acid, 2-formylbenzoic acid, 4-formylbenzoic acid, sodium 2-formylbenzenesulfonate, sodium 4-formylbenzenesulfonate, disodium 4-formylbenzene-1,3-disufonate, etc. Preferred are 4-formylbenzoic acid, sodium 2-formylbenzenesulfonate, or the like.

The carbonyl compound may be an acetal, which is a condensation product of an aldehyde and an alcohol, as described above. The acetal may be, but is not limited to, a condensation product of an aldehyde and a primary alcohol, e.g., methanol.

The carbonyl compound may be a single type or a combination of two or more types.

The PVA-based polymer (A) may have an additional acetal skeleton (or an additional acetal group or an additional acetal unit) that does not belong to the scope of the acetal skeleton having an ionic group.

Such an additional acetal skeleton may be a skeleton represented by the formula (1) wherein R is a group that lacks an ionic group (e.g., an aliphatic group, an aromatic group, or the like that lacks an ionic group). Examples of such a group include aliphatic groups, including alkyl groups, e.g., $C_{1-30}$ alkyl groups, such as a methyl, ethyl, propyl, butyl, pentyl, hexyl, heptyl, octyl, nonyl, decyl, or undecyl group; cycloalkyl groups, e.g., $C_{3-20}$ cycloalkyl groups, such as a cyclopentyl or cyclohexyl group; alkenyl groups, e.g., a vinyl, allyl or propenyl group; aromatic groups, including aryl groups, e.g., $C_{6-20}$ aryl groups, such as a phenyl or naphthyl group; etc.

The method for introducing such an additional acetal skeleton is not limited to a particular one and may be performed by a conventional procedure. For example, the PVA-based polymer (B) may be acetalized with an aldehyde corresponding to the additional acetal skeleton as described later. When the additional acetal skeleton is introduced in this manner, the additional acetal skeleton is typically formed from two adjacent vinyl alcohol units.

Examples of the aldehyde include aliphatic aldehydes including alkanals, such as acetaldehyde, propionaldehyde, butanal, pentanal, hexanal, heptanal, octanal, nonanal, decanal, undecanal, dodecanal, 2-methylbutanal, 2-ethylbutanal, 2-methylpentanal, or 2-ethylhexanal; cycloalkane carbaldehydes, such as cyclopentane carboxyaldehyde (cyclopentane carbaldehyde) or cyclohexane carboxyaldehyde (cyclohexane carbaldehyde); alkenals, for example, alkenals of 3 to 15 carbon atoms, preferably 3 to 10 carbon atoms, such as acrolein, crotonaldehyde, methacrolein, 3-buthenal, 3-methyl-2-butenal, 2-methyl-2-butenal, 2-pentenal, 3-pentenal, 4-pentenal, 2-hexenal, 3-hexenal, 4-hexenal, 5-hexenal, 2-ethylcrotonaldehyde, 2-methyl-2-pentenal, 3-(dimethylamino)acrolein, 10-undecenal, myristoleic aldehyde, palmitoleic aldehyde, oleic aldehyde, elaidic aldehyde, vaccenic aldehyde, gadoleic aldehyde, erucic aldehyde, nervonic aldehyde, linoleic aldehyde, citronellal, or cinnamaldehyde; alkadienals, for example, alkadienals of 5 to 15 carbon atoms, preferably 5 to 10 carbon atoms, such as 2,4-pentadienal, 2,4-hexadienal, 2,6-nonadienal, citral, or perillaldehyde; aromatic aldehydes including arene carbaldehydes, such as benzaldehyde or naphthaldehyde; etc.

When the carbonyl compound can exist as isomers, e.g., cis and trans isomers, the carbonyl compound includes any isomers, e.g., cis and trans isomers.

The PVA-based polymer (A) has at least vinyl alcohol units, but may have vinyl alcohol units and non-hydrolyzed units (non-saponified units) (e.g., vinyl ester units, or units derived from a vinyl ester-based monomer, such as a vinyl acetate units).

The PVA-based polymer (A), if necessary, may further have an additional unit, for example, a unit other than those described above, for example, a unit other than vinyl alcohol units, non-hydrolyzed units (residual vinyl ester units), the acetal skeleton having an ionic group, or the like. Examples of such an additional unit include a unit derived from another monomer, as exemplified in the section of the PVA-based polymer (B) described later.

When an additional unit is contained in the PVA-based polymer (A), the amount of the additional unit is selected as appropriate for the monomer used or other factors, and may be, for example, 20% by mass or less, e.g., 0.1 to 20% by

mass, 15% by mass or less, 10% by mass or less, etc. relative to the amount of the PVA-based polymer (A) or the total amount of the polymerization components.

The block character of the PVA-based polymer (A) (i.e., the block character of residual vinyl ester units) may be selected from, but is not limited to, the range of 0 to 2 depending on its applications, etc. To efficiently achieve the functions of the PVA-based polymer (A) or other purposes, the block character of the PVA-based polymer (A) may be selected from, for example, the range of about 0.1 to 1, about 0.15 to 0.85, about 0.2 to 0.7, about 0.25 to 0.6, or about 0.3 to 0.55, and may be less than 0.55, e.g., 0.30 or more and less than 0.55, 0.35 to 0.54, 0.37 to 0.53, etc.

The block character ($\eta$) (the block character of residual vinyl ester units) is a measure indicating the distribution of residual vinyl ester units ($-CH_2-CH(OCOR)-$) in a PVA. The block character can be determined by analyzing three types of peaks observed in the methylene region of $^{13}C$-NMR spectra. These three peaks correspond to the three types of dyad sequence structures corresponding to (OH, OH), (OH, OCOR), and (OCOR, OCOR), respectively. Their absorption intensities are proportional to the abundance of the three dyads. The block character ($\eta$) is expressed by the equation (1) shown below.

$$\eta = (OH, OCOR)/[2(OH)(OCOR)] \qquad \text{equation (1)},$$

wherein (OH, OCOR) represents the fraction of a dyad sequence structure in which an OH group is adjacent to an OCOR group, (OH) represents the fraction of vinyl alcohol units, and (OCOR) represents the fraction of residual vinyl ester groups. Each fraction is expressed as a mole fraction.

The block character takes the value of 0 to 2. A value closer to 0 indicates a more blocky distribution of vinyl ester groups. A value closer to 1 indicates a more random distribution of vinyl ester groups. A value closer to 2 indicates a more alternate-like distribution of vinyl ester groups. The measurement method or other details of the block character are described in detail in Macromolecules, 10, 532 (1977).

The block character of the PVA-based polymer (A) can be adjusted by, for example, adjusting the block character of its material, i.e., the PVA-based polymer (B). The block character may change when the PVA-based polymer (B) is formed into the PVA-based polymer (A). In such a case, the block character of the PVA-based polymer (B) may be adjusted considering the change. The change (an increase) in the block character may be a result of transesterification between a hydroxyl group and an ester group in the PVA-based polymer. Such transesterification may also be affected by the production conditions, which may affect the hue, the transparency, or the water-insoluble fraction of the PVA-based polymer (A) as described later. Therefore, the change (an increase) in the block character may be reflected in the hue (color development), the transparency, or the water-insoluble fraction of the PVA-based polymer (A) as described later (e.g., when a change in the block character of the PVA-based polymer is relatively inhibited, the hue, high transparency, or a low water-insoluble fraction (even a low YI) as described later are easily achieved).

The lower limit of the degree of saponification of the PVA-based polymer (A) may be, for example, 20 mol% or more, e.g., 22 mol% or more, preferably 25 mol% or more, e.g., 27 mol% or more, and more preferably 30 mol% or more.

The upper limit of the degree of saponification of the PVA-based polymer (A) may be, for example, 100 mol% or less, e.g., 99.9 mol% or less, 99 mol% or less, 98 mol% or less, 97 mol% or less, or 95 mol% or less, or may not be excessively high, for example, 90 mol% or less, e.g., 85 mol% or less, preferably 80 mol% or less, e.g., 75 mol% or less, and more preferably 70 mol% or less, 65 mol% or less, 60 mol% or less, 55 mol% or less, 50 mol% or less, 45 mol% or less, or 40 mol%.

Specifically, the degree of saponification of the PVA-based polymer (A) may be, for example, about 20 to 90 mol%, preferably about 25 to 80 mol%, and more preferably about 30 to 70 mol%, in particular, 70 mol% or less.

The present invention provides the PVA-based polymer (A) that has excellent water solubility or dispersibility and satisfies high transparency and a low water-insoluble fraction (and further has a low YI) as described later even when the PVA-based polymer (A) has a low degree of saponification, for example, a degree of saponification at which a PVA is usually insoluble in water or less soluble in water, e.g., a degree of saponification of 70 mol% or less.

The degree of saponification of the PVA-based polymer (A) is preferably not excessively low (e.g., about 20 mol% or more) so that the amount of hydroxyl groups that can react with the carbonyl compound such as an aldehyde increases, which leads to an increase in the reaction efficiency. The degree of saponification of the PVA-based polymer (A) is preferably not excessively high (e.g., about 90 mol% or less) so that the PVA-based polymer (A) is produced with good industrial productivity.

The degree of saponification can be determined by, for example, the measuring method for the degree of saponification of PVAs specified in JIS K 6726.

The degree of saponification of the PVA-based polymer (A) can be adjusted by, for example, adjusting the degree of saponification of its material, i.e., the PVA-based polymer (B). The degree of saponification may change when the PVA-based polymer (B) is formed into the PVA-based polymer (A). In such a case, the degree of saponification of the PVA-based polymer (B) may be adjusted considering the change.

The viscosity of a 4% by mass aqueous solution of the PVA-based polymer (A) at 20°C can be selected from the range of, but not limited to, for example, about 1 mPa·s or more, e.g., 1.1 mPa·s or more, and may be 1.2 mPa·s or more, e.g., 1.3 mPa·s or more, preferably 1.4 mPa·s or more, e.g., 1.5 mPa·s or more, and more preferably 1.6 mPa·s or more, e.g., 1.7 mPa·s or more, 1.8 mPa·s or more, 1.9 mPa·s or more, etc.

The upper limit of the viscosity of a 4% by mass aqueous solution of the PVA-based polymer (A) at 20°C may be selected from the range of, but not limited to, for example, about 2000 mPa or less, e.g., 1500 mPa·s or less, 1000 mPa·s or less, or 500 mPa·s or less, and may typically be selected from the range of about 300 mPa·s or less, e.g., 250 mPa·s or less, 200 mPa·s or less, 150 mPa·s or less, 120 mPa·s or less, 100 mPa·s or less, 80 mPa·s or less, or 50 mPa·s or less, or may be 30 mPa·s or less, e.g., 20 mPa·s or less, preferably 15 mPa·s or less, e.g., 10 mPa·s or less, and more preferably 9 mPa·s or less, e.g., 8 mPa·s or less, etc.

Specifically, the viscosity of a 4% by mass aqueous solution of the PVA-based polymer (A) at 20°C may be, for example, about 1 to 500 mPa·s, e.g., 1.2 to 300 mPa·s, 1.3 to 100 mPa·s, 1.4 to 100 mPa·s, or 1.5 to 30 mPa·s, and may be about 20 mPa·s or less, e.g., 1.6 to 15 mPa·s, 1.7 to 10 mPa·s, 1.8 to 9 mPa·s, or 1.9 to 8 mPa·s.

The (average) degree of polymerization of the PVA-based polymer (A) may be, but is not limited to, e.g., 100 or more, e.g., 120 or more, preferably 150 or more, e.g., 160 or more, and more preferably 180 or more, e.g., 200 or more, 220 or more, 250 or more, 280 or more, 300 or more, etc.

The upper limit of the (average) degree of polymerization of the PVA-based polymer (A) may be, but is not limited to, for example, selected from the range of about 10000 or less, e.g., 8000 or less, or 5000 or less, and may be 3000 or less, e.g., 2500 or less, preferably 2000 or less, e.g., 1500 or less, and more preferably 1000 or less, e.g., 800 or less.

Specifically, the (average) degree of polymerization of the PVA-based polymer (A) may be, for example, about 120 to 3000, e.g., 120 to 2000, preferably about 150 to 2000, and more preferably about 180 to 1500.

The viscosity of a 4% by mass aqueous solution of the PVA-based polymer (A) and the degree of polymerization of the PVA-based polymer (A) are preferably not excessively small (e.g., about 120 or more) so that its material, i.e., the PVA-based polymer (B), exhibits good productivity. The viscosity of a 4% by mass aqueous solution of the PVA-based polymer (A) and the degree of polymerization of the PVA-based polymer (A) are preferably not excessively large (e.g., about 3000 or less) so that the PVA-based polymer (A) is produced with good industrial productivity.

The viscosity of a 4% by mass aqueous solution of the PVA-based polymer (A) at 20°C is determined by, for example, the method specified in JIS K 6726. The degree of polymerization of the PVA-based polymer (A) may be determined by, for example, the method specified in JIS K 6726. The degree of polymerization may be a calculation value (or converted value) based on other analytical methods (for example, may be a value calculated based on (or converted from) the viscosity of a 4% by mass aqueous solution of the PVA-based polymer (A)).

The viscosity of a 4% by mass aqueous solution of the PVA-based polymer (A) and the (average) degree of polymerization of the PVA-based polymer (A) can be adjusted by, for example, adjusting the viscosity of a 4% by mass aqueous solution of the PVA-based polymer (B) and the degree of polymerization of the PVA-based polymer (B), which serves as a material for preparing the PVA-based polymer (A). Typically, the viscosity of a 4% by mass aqueous solution of the PVA-based polymer (B) and the degree of polymerization of the PVA-based polymer (B) are reflected in the viscosity of a 4% by mass aqueous solution of the PVA-based polymer (A) and the (average) degree of polymerization of the PVA-based polymer (A).

The YI (yellowness, or yellow index) of a 4% by mass solution of the PVA-based polymer (A) in dimethyl sulfoxide (DMSO) may be, for example, 10 or less, preferably 8 or less, e.g., 6 or less, and more preferably 5 or less, e.g., 4 or less, 3.5 or less, 3 or less, 2.5 or less, 2 or less, 1.5 or less, 1.2 or less, 1 or less, less than 1, 0.8 or less, 0.5 or less, 0.3 or less, 0.1 or less, etc.

The YI of a 4% by mass solution of the PVA-based polymer (A) in DMSO can be calculated from data obtained by, for example, measuring the UV-Vis spectrum of a 4% by mass solution of the PVA-based polymer (A) in DMSO at 20°C (in, e.g., a quartz cell with a 10 mm optical path length) using an ultraviolet-visible spectrometer.

A YI reflects color development. The PVA-based polymer (A) with such a YI as above is excellent in hue (color development is inhibited). The YI is easily and efficiently adjusted to fall within the range described above by selecting the production conditions of the PVA-based polymer (A) as described later.

The PVA-based polymer (A) is preferably dissolved or dispersed in water.

The transparency of a 4% by mass aqueous solution of the PVA-based polymer (A) at 430 nm at 20°C, may be, for example, 1% or more, preferably 2% or more, e.g., 3% or more, or 4% or more, and more preferably 5 % or more, e.g., 7% or more, and may be 10% or more, e.g., 20% or more, 30% or more, 40% or more, 50% or more, 60% or more, 65% or more, etc.

In particular, the transparency of a 4% by mass aqueous solution of the PVA-based polymer (A) at 20°C may be 40% or more, 50% or more, 60% or more, or 68% or more, e.g., 70% or more, 72% or more, 75% or more, 77% or more, 80% or more, 82% or more, 85% or more, etc.

The transparency of a 4% by mass aqueous solution of the PVA-based polymer (A) at 430 nm at 20°C can be determined by, for example, measuring the transmittance at 430 nm at 20°C with an ultraviolet-visible spectrophotometer

(using, e.g., a quartz cell with a 20 mm optical path length) using water as a blank.

The water-insoluble fraction of the PVA-based polymer (A) may be, for example, 50% by mass or less, 30% by mass or less, 25% by mass or less, 20% by mass or less, e.g., 18% by mass or less, preferably 15% by mass or less, e.g., 12% by mass or less, and more preferably 10% by mass or less, e.g., 8% by mass or less.

In particular, the water-insoluble fraction of the PVA-based polymer (A) may be 20% by mass or less, 15% by mass or less, 10% by mass or less, 8% by mass or less, or 5% by mass or less, e.g., less than 5% by mass, 4% by mass or less, 3% by mass or less, 2% by mass or less, 1% by mass or less, 0.8% by mass or less, 0.6% by mass or less, 0.5% by mass or less, 0.4% by mass or less, 0.3% by mass or less, 0.2% by mass or less, 0.1% by mass or less, 0.08% by mass or less, 0.06% by mass or less, 0.04% by mass, 0.02% by mass or less, 0.01% by mass or less, etc.

The water-insoluble fraction can be determined as follows. For example, a solution (liquid mixture) containing a PVA dissolved in water at 50°C (e.g., dissolved in a 50-fold mass of water) is passed through a filter (wire mesh) with a predetermined opening (e.g., 100 mesh). The amount of the remaining residue that does not pass through the filter (wire mesh) (the amount of water-insoluble matter) is measured. The water-insoluble fraction is calculated by the following formula: the amount of water-insoluble matter/the total amount of the PVA-based polymer (A) $\times$ 100 (%).

Specifically, the water-insoluble fraction can be determined by the method in the Examples described later.

The transparency of a 4% by mass aqueous solution of the PVA-based polymer (A) and the water-insoluble fraction of the PVA-based polymer (A) can serve as measures for the solubility or dispersibility of the PVA-based polymer (A) in water. When the transparency is high and/or the water-insoluble fraction is small, the PVA-based polymer (A) tends to exhibit excellent solubility or dispersibility in water.

The transparency and the water-insoluble fraction are also probably related to the unevenness of the reactivity (for example, the homogeneity of the reaction for introducing the acetal skeleton having an ionic group in the PVA-based polymer (A) (acetalization reaction)). Accordingly, by reducing the unevenness of the reactivity (i.e., enhancing the homogeneity of the reaction) in the production of the PVA-based polymer (A), the requirements for the transparency and the water-insoluble fraction can be efficiently satisfied. Homogeneity of the reactivity can be enhanced by selecting the production conditions of the PVA-based polymer (A) as described later.

Production method

The method for producing the PVA-based polymer (A) is not particularly limited. For example, the PVA-based polymer (A) can be produced by acetalizing the polyvinyl alcohol-based polymer (B) with a carbonyl compound (such as an aldehyde) having an ionic group. The PVA-based polymer (B) and the acetalization will be described in detail below.

Polyvinyl alcohol-based polymer (B)

The polyvinyl alcohol-based polymer (may also be referred to as a PVA-based polymer (B), PVA (B), etc.) may be, but is not limited to, for example, a PVA-based polymer obtained by saponification (reaction) of a vinyl ester-based polymer (i.e., a saponified product of a vinyl ester-based polymer (a polymer polymerized from a vinyl ester-based monomer as a polymerization component)).

The vinyl ester-based polymer can be obtained by polymerization of at least a vinyl ester-based monomer (by polymerizing at least the vinyl ester-based monomer as a polymer component). The polymerization may be performed in accordance with a conventionally known method, and the polymerization method includes, for example, but is not limited to, bulk polymerization, solution polymerization, suspension polymerization, emulsion polymerization, or the like. For ease of controlling the degree of polymerization or performing a saponification reaction after polymerization, preferred polymerization methods are, but not limited to, solution polymerization using methanol as a solvent, or suspension polymerization using water or water/methanol as a dispersion medium.

Examples of the vinyl ester-based monomer that can be used for the polymerization include, but are not limited to, vinyl esters of fatty acids, such as vinyl acetate, vinyl formate, vinyl propionate, vinyl caprylate, or vinyl versatate, etc. The vinyl ester-based monomer may be a single type or two or more types. Preferred among these is vinyl acetate for industrial applications.

In the polymerization of the vinyl ester-based monomer, the vinyl ester-based monomer may be copolymerized with another monomer as long as the effects of the present invention can be achieved. In other words, the polymerization components of the vinyl ester-based polymer may include a vinyl ester-based monomer and another monomer.

Examples of said another monomer that can be used for copolymerization include, but are not limited to, $\alpha$-olefins, such as ethylene, propylene, n-butene, and isobutylene; (meth)acrylic acid and salts thereof; (meth)acrylic esters, including (meth)acrylic alkyl esters, such as $C_{1-20}$ alkyl (meth)acrylates, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, dodecyl (meth)acrylate, and octadecyl (meth)acrylate); (meth)acrylamide; (meth)acrylamide derivatives, such as N-methyl(meth)acrylamide, N-ethyl(meth)acrylamide, N,N-dimethyl(meth)acrylamide,

diacetone (meth)acrylamide, (meth)acrylamidopropanesulfonic acid and salts thereof, (meth)acrylamidopropyldimethylamine, and salts thereof or quaternary salts thereof, and N-methylol(meth)acrylamide; vinyl ethers, such as $C_{1-20}$ alkyl vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate, allyl chloride, and sodium allylsulfonate; unsaturated dicarboxylic acids, such as maleic acid, itaconic acid, fumaric acid, and salts thereof or esters thereof; vinylsilyl compounds, such as vinyltrimethoxysilane; alkenyl esters of fatty acids, such as isopropenyl acetate; etc. The said another monomer may be a single type or two or more types.

When such another monomer is used, the amount of such another monomer is, for example, 0.1 to 20% by mass etc. relative to the total amount of the monomers.

A chain transfer agent may coexist in the polymerization of the vinyl ester-based monomer to adjust the degree of polymerization of the resulting vinyl ester-based polymer or for other purposes.

Examples of the chain transfer agent include, but are not limited to, aldehydes, such as acetaldehyde, propionaldehyde, butyraldehyde, or benzaldehyde; ketones, such as acetone, methyl ethyl ketone, hexanone, or cyclohexanone; mercaptans, such as 2-hydroxyethanethiol, dodecylmercaptan, 3-mercaptopropionic acid, mercaptosuccinic acid, or sodium 3-mercapto-1-propanesulfonate; and organic halides, such as carbon tetrachloride, trichloroethylene, or perchloroethylene. Among these, aldehydes and ketones are suitable. The amount of the chain transfer agent added is selected as appropriate for the chain transfer constant of the chain transfer agent added and the intended degree of polymerization of the vinyl ester-based polymer. Typically, the amount of the chain transfer agent is desirably 0.1 to 10% by mass relative to the total amount of monomers.

The vinyl ester-based polymer obtained as described above can be subjected to a saponification reaction to give the PVA-based polymer (B).

The saponification reaction of the vinyl ester-based polymer may be performed by any method in accordance with a conventionally known method. For example, the saponification reaction may be performed by alcoholysis or hydrolysis using a basic catalyst, i.e., a base catalyst, e.g., a hydroxide of an alkali metal, such as sodium hydroxide or potassium hydroxide; an acidic catalyst, i.e., an acid catalyst, e.g., an inorganic acid, such as hydrochloric acid, sulfuric acid, nitric acid, or phosphoric acid, or an organic acid, such as a carboxylic acid such as a fatty acid, such as formic acid, acetic acid, or oxalic acid, a sulfonic acid such as p-toluenesulfonic acid; etc. The catalyst may be a single type or a combination of two or more types.

The solvent used in the saponification reaction may be, for example, in addition to water, an alcohol such as methanol or ethanol; an ester such as methyl acetate or ethyl acetate; a ketone such as acetone or methyl ethyl ketone; an aromatic hydrocarbon such as benzene or toluene; etc. The solvent may be a single type or a combination of two or more types.

After the saponification reaction, a neutralizing agent may be used (added) depending on the type of residual catalyst. When a basic catalyst is used, the neutralizing agent may be an acidic substance including, for example, an organic acid, e.g., a carboxylic acid, such as formic acid, acetic acid, propionic acid, or oxalic acid; or an inorganic acid, e.g., phosphoric acid, a hydrogen phosphate salt, sulfuric acid, hydrochloric acid, nitric acid, etc. When an acidic catalyst is used, the neutralizing agent may be a basic substance or an alkaline substance including, for example, a hydroxide of an alkali metal, such as sodium hydroxide, or potassium hydroxide.

The neutralizing agent may be a single type or a combination of two or more types.

In particular, to achieve efficient saponification (e.g., an efficient saponification rate, etc.), a basic catalyst is preferably used in the saponification reaction in the present invention, and the neutralizing agent is preferably at least one selected from a carboxylic acid (a fatty acid such as acetic acid etc.), phosphoric acid, and a hydrogen phosphate salt, and is, in particular, at least one selected from phosphoric acid and a hydrogen phosphate salt.

By performing neutralization in this manner (i.e., saponification followed by neutralization), (1) improvement in the reaction efficiency, (2) inhibition of color development in the PVA-based polymer (A), and (3) improvement in the water solubility (water dispersibility) of the PVA-based polymer (A) are easily achieved in the subsequent acetalization reaction step, and the requirements for the YI, the transparency, the water-insoluble fraction, etc. as described above can be easily and efficiently satisfied.

These tendencies are significantly observed when phosphoric acid or the like is used. Although the reasons for this are unclear, the tendencies are probably due to the following. Phosphoric acid or the like, when used in an excessive amount, tends to remain in the system during the acetalization reaction under heating and, as a result, efficiently functions as a catalyst, as compared with acetic acid or the like. Further, a phosphoric acid salt (a hydrogen phosphate salt) is not likely to deteriorate the hue as compared with a carboxylic acid salt (such as sodium acetate) that is generated as a by-product of the neutralization. In particular, even when the acetalization reaction is performed with heating at a relatively high temperature, a phosphoric acid salt (a hydrogen phosphate salt) is not likely to deteriorate the hue.

The block character of the PVA-based polymer (B) and the degree of saponification of the PVA-based polymer (B)

are not limited to particular values. However, the degree of saponification of the PVA-based polymer (A) may change from that of the PVA-based polymer (B) when the PVA-based polymer (A) is produced from the PVA-based polymer (B) as the raw material in the subsequent acetalization reaction or other reactions. In such a case, the block character of the PVA-based polymer (B) and the degree of saponification of the PVA-based polymer (B) are preferably adjusted considering the change.

The viscosity of a 4% by mass aqueous solution of the PVA-based polymer (B) and the degree of polymerization of the PVA-based polymer (B) are also not limited to particular values. However, the viscosity of a 4% by mass aqueous solution of the PVA-based polymer (B) and the degree of polymerization of the PVA-based polymer (B), which serves as a material of the PVA-based polymer (A), can typically be reflected in the those of the PVA-based polymer (A) in the subsequent acetalization reaction or other reactions. Accordingly, the viscosity of a 4% by mass aqueous solution of the PVA-based polymer (B) and the degree of polymerization of the PVA-based polymer (B) are preferably adjusted to the target viscosity of a 4% by mass aqueous solution of the PVA-based polymer (A) and the target degree of polymerization of the PVA-based polymer (A). Depending on the degree of saponification or other factors of the PVA-based polymer (B), i.e., when the degree of saponification of the PVA-based polymer (B) is low, the PVA-based polymer (B) may be insoluble in water. In such a case, the degree of polymerization of the PVA-based polymer (B) may be adjusted based on the target degree of polymerization of the PVA-based polymer (A).

## Acetalization

The method for introducing the acetal skeleton having an ionic group, such as a carboxyl group, a sulfonic acid group, or a salt thereof, into the PVA-based polymer (A) is not limited to a particular one in the present invention. For example, the PVA-based polymer (A) can be produced by acetalizing the PVA-based polymer (B) with a carbonyl compound (such as an aldehyde, an acetal thereof, a ketone, or the like) having an ionic group. The acetalization method may be, for example, performed as follows, but is not limited to the following.

A specific acetalization method (the acetalization step) may include a method including a heating step including heating a composition (in a solid form or a molten state) comprising the PVA-based polymer (B) and a carbonyl compound having an ionic group; or a heating step including heating the PVA-based polymer (B) in the presence of a carbonyl compound having an ionic group; or a heating step including heating the PVA-based polymer (B) together with a carbonyl compound having an ionic group.

Exemplary methods include, for example, the following methods. A method (a) for producing the PVA-based polymer (A) includes preparing a solution (a homogeneous solution, a composition in a solution form, a composition in a solvent) containing the PVA-based polymer (B), a carbonyl compound (such as an aldehyde) having an ionic group and, as needed, an acetalization catalyst (such as an acid catalyst); removing (evaporating) the solvent from the solution; and heating the resulting composition to perform acetalization (acetalization in a solid form (or in the composition in a solid form) or in a molten state (or in the composition in a molten state)). A method (b) includes heating a solid mixture of the PVA-based polymer (B), a carbonyl compound (such as an aldehyde) having an ionic group and as needed, an acetalization catalyst (such as an acid catalyst) (at least the PVA-based polymer (B) is in a solid form), without preparing a solution, to perform acetalization (acetalization in a solid form (or in a composition in a solid form) or in a molten state (or in a composition in a molten state), in particular, acetalization in a molten state).

Of these methods, the method (a) is preferred to efficiently achieve the hue, the transparency, and the water-insoluble fraction as described above.

The method (a) may be, for example, a method including a solvent-removal step including, from a composition (or a composition in a solvent, a composition in a solution form, or a solution) comprising a PVA-based polymer (B), a carbonyl compound having an ionic group and a solvent, removing the solvent, wherein the heating step is performed after the solvent-removal step (for example, after the composition obtained in the solvent-removal step is collected, the heating step is performed on the composition separately from the solvent-removal step), or the heating step is performed in parallel with the solvent-removal step or successively to the solvent-removal step (for example, after the composition is obtained in the solvent-removal step, the heating step is performed on the composition directly in the system in which the solvent-removal step is performed (the heating step is performed in parallel with the solvent-removal step or successively to the solvent-removal step directly in the system in which the solvent-removal step is performed)).

In the method (a), a solution of the PVA-based polymer (B) may be prepared by (i) dissolving the PVA-based polymer (B) in a solvent, or (ii) performing a saponification reaction of a vinyl ester-based polymer with a basic catalyst such as sodium hydroxide in a solvent such as methanol.

Exemplary methods for acetalization may include (i) a method including removing (e.g., evaporating) a solvent from a solution (a homogeneous composition or a composition in the solvent) to prepare a composition in a solid form, and heating the composition in a solid form under the predetermined conditions; and (ii) a method including heating a solution (a homogeneous composition or a composition in a solvent) to perform heating of the composition in parallel with or successively to evaporation of the solvent.

During the acetalization, the composition (after the removal of the solvent) is converted into a solid form or a molten state during the heating depending on the heating conditions or other conditions. For example, when the heating temperature is lower than the melting point of the PVA-based polymer (B) (and lower than the melting point of the resulting PVA-based polymer (A)), the composition is converted into a solid form. When the heating temperature is higher than the melting point of the PVA-based polymer (B) (and higher than the melting point of the resulting PVA-based polymer (A)), the composition is converted into a molten state.

The solvent may be any solvent that can dissolve the PVA-based polymer (B), but the solvent is required to be evaporated during the process of the acetalization reaction. To achieve efficient evaporation (e.g., efficient evaporation without a need for excessive heating), the boiling point of the solvent under normal pressure is, preferably 150°C or less, more preferably 130°C or less, and further preferably 110°C or less.

Specific examples of the solvent include, in addition to water, alcohols such as methanol and ethanol; esters such as methyl acetate and ethyl acetate; ethers such as diethyl ether and tetrahydrofuran; and aromatics such as benzene and toluene. The solvent is preferably a single type of solvent or a solvent mixture of one or more selected from water, methanol and methyl acetate.

The type of the solvent and/or the mixing ratio of the solvent mixture may be adjusted as appropriate to completely dissolve the PVA-based polymer (B).

The concentration of the PVA-based polymer (B) in the solution is not limited to a particular one and may be selected as appropriate for the type and physical properties (such as the degree of saponification) and other properties of the PVA-based polymer (B). For example, the concentration of the PVA-based polymer (B) in the solution may typically be about 5 to 70% by mass. When the degree of polymerization of the PVA-based polymer (B) is about 500 or less, etc., the concentration of the PVA-based polymer (B) in the solution may be relatively high (e.g., about 40 to 70% by mass). Advantageously, the concentration of the PVA-based polymer (B) in the solution is high so that the amount of the solvent required to be evaporated in the acetalization step is small.

When the acetalization (the heating step) is performed using such a solution (the composition in the solvent), efficient acetalization can be easily performed while reducing unevenness of the reactivity, thereby efficiently achieving the YI, the transparency, the water-insoluble fraction or other characteristics as described above.

Examples of the carbonyl compound (such as an aldehyde) having an ionic group include glyoxylic acid, 2-formylbenzoic acid, 4-formylbenzoic acid, sodium 2-formylbenzenesulfonate, sodium 4-formylbenzenesulfonate, disodium 4-formylbenzene-1,3-disufonate, etc. Preferred are 4-formylbenzoic acid, sodium 2-formylbenzenesulfonate, or the like. An aldehyde can be directly added to the solution of the PVA-based polymer (B), or can be dissolved in an appropriate solvent (such as water or methanol) and then added to the solution of the PVA-based polymer (B).

The amount of the carbonyl compound (such as an aldehyde) having an ionic group added to the PVA-based polymer (B) may vary depending on the amount of the acetal skeleton having an ionic group that is to be introduced into the PVA-based polymer (A), and may be, for example, preferably 0.1 parts by weight or more, preferably 0.3 parts by weight, and more preferably 0.5 parts by weight relative to 100 parts by weight of the PVA-based polymer (B). The amount of the carbonyl compound (such as an aldehyde) having an ionic group added to the PVA-based polymer (B) may preferably be 50 parts by weight or less, more preferably 40 parts by weight or less, and further preferably 30 parts by weight or less.

The acetalization catalyst is optional, but may be appropriately used to enhance the reaction efficiency etc. The acetal catalyst may be an acid catalyst. Examples of the acid catalyst include organic acids, for example, carboxylic acids, such as formic acid, acetic acid, propionic acid, and oxalic acid; inorganic acids, for example, phosphoric acid, a hydrogen phosphate salt, sulfuric acid, hydrochloric acid and nitric acid; etc. The acid catalyst may be a single type or a combination of two or more types.

The acetalization catalyst is preferably at least one selected from a carboxylic acid (a fatty acid such as acetic acid etc.), phosphoric acid, and a hydrogen phosphate salt, and is, in particular, phosphoric acid.

By using such a catalyst, synergistically with the acetalization reaction using the solution (the composition in the solvent) as described above, (1) improvement in the reaction efficiency, (2) inhibition of color development in the PVA-based polymer (A), and (3) improvement in the water solubility (water dispersibility) of the PVA-based polymer (A) are more easily achieved, and the requirements for the YI, the transparency, the water-insoluble fraction, etc. as described above can be easily and efficiently satisfied. These tendencies are significantly observed when phosphoric acid or the like is used. Although the reasons for this are unclear, the tendencies are probably due to the following. Phosphoric acid or the like tends to remain in the system during the acetalization reaction under heating and, as a result, efficiently functions as a catalyst as compared with acetic acid or the like. As a result, a sufficient acetalization reaction is easily performed without an excessively high heating temperature (balanced acetalization can be performed).

The amount of the acetalization catalyst (e.g., an acid catalyst such as phosphoric acid) added to the reaction is preferably 0.005 mol or more, or 0.01 mol or more, and is preferably 0.5 mol or less, or 0.2 mol or less relative to 100 mol of the monomer units of the PVA-based polymer (B).

When the amount of the acetalization catalyst is in the above range, the effects of the above (1) to (3) can be easily achieved. However, when the amount of the acetalization catalyst added to the reaction is too small, the effects of the

above (1) to (3) are difficult to achieve. When the amount of the acetalization catalyst added to the reaction is too large, the reaction efficiency is improved but considerable color development in the PVA-based polymer (A) may be observed, and in the worst-case scenario, the PVA-based polymer (A) becomes insoluble.

The method (a) includes the step (solvent-removal step) including removing (e.g., evaporating) a solvent from a composition (a composition in a solvent, a solution, or a homogeneous composition) comprising the PVA-based polymer (A), the carbonyl compound (such as an aldehyde) having an ionic group and as needed, an acid catalyst, as described above.

The removal of the solvent in the solvent-removal step may be performed by any method, and evaporation of the solvent is easy to perform. The evaporation of the solvent (drying method) may include natural drying, drying under heating, drying under reduced pressure, and a combination thereof. When drying under heating is performed, the drying temperature can be selected depending on the type etc. of the solvent.

The composition after the solvent-removal step is subjected to the heating step. The heating step is performed after the solvent-removal step, or is performed in parallel with the solvent-removal step or successively to the solvent-removal step, as described above.

The heating temperature (the heating temperature in the heating step) is preferably 80°C or more, more preferably 100°C or more, or 120°C or more, and may be 130°C or more. The heating temperature is preferably 240°C or less, more preferably 220°C or less, or 200°C or less, and may be 190°C or less.

When the heating temperature is too low, sufficient acetalization may not proceed. When the heating temperature is too high, considerable color development in the PVA-based polymer (A) may be observed, and in the worst-case scenario, the PVA-based polymer (A) becomes insoluble.

In the method (a), the PVA-based polymer (B) and the carbonyl compound (such as an aldehyde) having an ionic group are homogeneously mixed in a solution (in a solution form) before the acetalization. Therefore, the heating temperature is not necessarily above the melting point of the PVA-based polymer (B). Homogeneous acetalization can be allowed to proceed even at a temperature that is lower than the melting point and, as a result, the requirements for the YI, the transparency, the water-insoluble fraction or other characteristics as described above can be efficiently achieved.

The heating time may be, but is not limited to, preferably about 5 minutes or more, more preferably 7 minutes or more, and may be 10 minutes or more. The heating time is preferably 5 hours or less, more preferably 3 hours or less, or 2 hours or less, and may be 1 hour or less. When the reaction is performed by the method in which the heating of the composition is performed in parallel with or successively to the evaporation of the solvent, the temperature of the product is not equal to the heating temperature during the evaporation of the solvent from the composition. Therefore, this period of time, i.e., drying time during the solvent-removal step described above is not included in the heating time.

When the heating temperature is too low, sufficient acetalization may not proceed. When the heating temperature is too high, considerable color development in the PVA-based polymer (A) may be observed, and in the worst-case scenario, the PVA-based polymer (A) becomes insoluble.

A heating device may be an air dryer or a vacuum dryer equipped with a temperature adjustment function when the heating is performed by a batch process. When the heating is performed continuously, a thin-film evaporator etc. can be used.

Applications etc.

The PVA-based polymer (A) can be used in various applications. In particular, the PVA-based polymer (A) is suitable for use as a hot melt adhesive or a dispersing agent (a dispersion aid), for example, a dispersing agent (a dispersion aid) for polymerization, e.g., suspension polymerization as described above.

In such various applications, the PVA-based polymer (A) may be a single type or a combination of two or more types. For example, the PVA-based polymer (A) having a relatively high viscosity measured as a 4% by mass aqueous solution (a relatively high degree of polymerization) and/or a relatively high degree of saponification can be used in combination with the PVA-based polymer (A) having a lower viscosity measured as a 4% by mass aqueous solution (a lower degree of polymerization) and/or a lower degree of saponification.

As one example of these applications, use as a dispersing agent (or use of the PVA-based polymer (A); the same applies to the below), and a method for producing a vinyl-based polymer by polymerization (in particular, suspension polymerization) using the dispersing agent will be described below.

Suspension polymerization is a polymerization process in which an insoluble vinyl-based monomer and an oil-soluble polymerization initiator are added to an aqueous solvent and stirred to form small droplets containing the vinyl-based monomer, and polymerization occurs within the droplets. The aqueous solvent used herein may include, but is not limited to, for example, water, an aqueous solution containing any type of components, a mixed solvent of water and a water-compatible organic solvent, etc.

The PVA-based polymer (A) can be used as a dispersing agent for suspension polymerization of a vinyl-based monomer. The vinyl-based monomer is preferably, but not limited to, for example, a vinyl-based monomer that is

commonly subjected to suspension polymerization, such as vinyl chloride, vinylidene chloride, styrene, an acrylic ester, a methacrylic ester, vinyl acetate, acrylonitrile, etc. Particularly preferred is a vinyl chloride-based monomer.

Examples of the vinyl chloride-based monomer include a vinyl chloride monomer (vinyl chloride), and a mixture of a vinyl chloride monomer and another monomer copolymerizable with the vinyl chloride monomer. Examples of said another monomer copolymerizable with the vinyl chloride monomer include monomers such as vinylidene chloride, vinyl acetate, ethylene, propylene, acrylic acid, an acrylic ester, methacrylic acid, a methacrylic ester, styrene, a vinylalkoxysilane, maleic acid, a hydroxyalkyl acrylate, allylsulfonic acid, vinyl sulfonic acid, etc.

The dispersing agent (the PVA-based polymer (A)) is thus suitable for suspension polymerization of a vinyl-based monomer containing a vinyl chloride-based monomer (in particular, vinyl chloride). In particular, the dispersing agent is suitable for use in the homopolymerization of vinyl chloride by suspension polymerization. The dispersing agent can also be used in binary copolymerization or multicomponent copolymerization of three or more types of monomers by suspension polymerization of vinyl chloride with one or more monomers selected from known monomers copolymerizable with vinyl chloride. In particular, the dispersing agent is suitable for use as a dispersion aid for suspension copolymerization of vinyl chloride with vinyl acetate.

Suspension polymerization of a vinyl-based monomer containing vinyl chloride will yield a vinyl chloride-based resin. In the production of the vinyl chloride-based resin, the amount of vinyl chloride is preferably 50 to 100 mol% or 50 to 100% by mass relative to the total amount of the vinyl-based monomers used.

A polymerization initiator used in suspension polymerization of a vinyl-based monomer may be a known polymerization initiator, including, for example, percarbonate compounds, such as diisopropyl peroxydicarbonate, di-2-ethylhexyl peroxydicarbonate, or diethoxyethyl peroxydicarbonate; perester compounds, such as benzoyl peroxide, t-butyl peroxyneodecanoate, $\alpha$-cumyl peroxyneodecanoate, or t-butyl peroxydecanoate; peroxides, such as acetyl cyclohexylsulfonyl peroxide or 2,4,4-trimethylpentyl-2-peroxyphenoxyacetate; azo compounds, such as 2,2'-azobis(isobutyronitrile), azobis(2,4-dimethylvaleronitrile), or azobis(4-methoxy-2,4-dimethylvaleronitrile); benzoyl peroxide; lauroyl peroxide; etc. These compounds can be used in combination with potassium persulphate, ammonium persulphate, hydrogen peroxide, or the like.

The amount of the PVA-based polymer (A) (or the dispersion aid) used in the suspension polymerization may be, but is not limited to, for example, about 1 part by mass or less, e.g., 0.002 to 0.5 parts by mass, or 0.005 to 0.2 parts by mass, relative to 100 parts by mass of the vinyl-based monomer.

The polymerization (suspension polymerization) may be performed in the presence of a dispersing agent (an additional dispersing agent or a dispersion stabilizing agent). In other words, the PVA-based polymer (A) may be used in combination with a dispersing agent (an additional dispersing agent or a dispersion stabilizing agent). The PVA-based polymer (A) may be a dispersing agent (for suspension polymerization etc.) for use together with an additional dispersing agent.

Examples of the additional dispersing agent include water-soluble polymers, for example, cellulose derivatives, such as water-soluble cellulose ethers, such as methyl cellulose, hydroxyethyl cellulose, hydroxypropyl cellulose, and carboxymethyl cellulose, gelatin, polyvinyl alcohol-based polymers, polyvinylpyrrolidone, etc.; emulsifiers or surfactants, for example, sorbitan monolaurate, sorbitan trioleate, glycerol tristearate, an ethylene oxide-propylene oxide block polymer, polyoxyethylene glycerol oleate and sodium laurate, etc.; and the like. These additional dispersing agents may be used as a single type or a combination of two or more types.

Among these, a PVA-based polymer (a PVA-based polymer that does not belong to the scope of the PVA-based polymer (A)) or the like may be suitable for use in the polymerization.

The PVA-based polymer (such as a polyvinyl alcohol etc.) may be a PVA-based polymer that does not belong to the scope of the PVA-based polymer (A). Typically, the degree of saponification and the viscosity measured as a 4% by mass aqueous solution (the degree of polymerization) etc. of the PVA-based polymer may be different from (e.g., larger than) those of the PVA-based polymer (A).

For example, the degree of saponification of the PVA-based polymer may be, for example, 60 mol% or more, 70 mol% or more, 75 mol% or more, 65 to 90 mol%, etc. The degree of polymerization of the PVA-based polymer may be 300 or more, e.g., 500 or more, 500 or more, 1000 or more, 2000 or more, etc., and may be 10000 or less, e.g., 8000 or less, 5000 or less, 3000 or less, etc.

The additional dispersing agent may exhibit a specific function depending on the type of the PVA-based polymer (A) to be used together, the type of monomers to be polymerized, or other factors. For example, the additional dispersing agent (such as a water-soluble polymer) may function as a dispersing agent (a primary dispersing agent or an additional dispersion aid) or the like to stabilize the dispersion of a vinyl chloride monomer, thereby adjusting the particle size of the resulting vinyl chloride-based resin. On the other hand, the PVA-based polymer (A) may function as a dispersing agent (a secondary dispersing agent or a dispersion aid) to increase the porosity of the resulting vinyl chloride-based resin.

The amount of the additional dispersing agent used in the suspension polymerization of a vinyl-based monomer may be, but is not limited to, for example, about 5 parts by mass or less, e.g., 0.005 to 1 part by mass, or 0.01 to 0.2 parts by mass, relative to 100 parts by mass of the vinyl-based monomer.

In addition to the polymerization initiator and the additional dispersing agent, various types of known additives can be used in the suspension polymerization of a vinyl-based compound, and examples of the additives include a chain transfer agent, a polymerization inhibitor, a pH adjuster, a scale inhibitor, and a crosslinking agent.

The polymerization temperature in suspension polymerization is not limited to a particular one and can be selected depending on the type of vinyl-based monomer used, the intended degree of polymerization of a polymer, the intended yield of polymerization, etc. Typically, the polymerization temperature is preferably 40 to 70°C. The polymerization time is also not limited to a particular one and is set as appropriate for the intended yield of polymerization, etc.

EXAMPLES

The present invention will be specifically described in more detail below with reference to Examples, but the present invention is not limited thereto.

The terms "%" and "parts" in the Examples and the Comparative Examples below mean "% by mass" or "% by weight" and "parts by mass" or "parts by weight," respectively, unless otherwise specified.

First, the methods for measuring YI, the block character of residual vinyl ester units in a PVA (A), the transparency of a 4% aqueous solution of a PVA (A), and the water-insoluble fraction in the Examples will be described below.

Measurement method of degree of polymerization

The measurement was performed in accordance with the method stipulated in JIS K 6726.

Measurement method of degree of saponification

The measurement was performed in accordance with the method stipulated in JIS K 6726.

Measurement of YI

A 4% solution of a PVA (A) in DMSO was placed in a quartz cell with a 10 mm optical path length. The UV-Vis spectrum was measured at 20°C using an ultraviolet-visible spectrometer (manufactured by JASCO Corporation; V-730). The YI of the 4% solution of the PVA (A) in DMSO was calculated from the resulting data. DMSO was used as a blank.

Measurement method of block character

A mixed solution of PVA/$D_2O$/MeOH (methanol) (the composition of the solution is adjusted as appropriate for the degrees of polymerization and saponification of the PVA) was subjected to a $^{13}C$-NMR measurement (measurement temperature = 50°C) using a 400 MHz nuclear magnetic resonance spectrometer manufactured by Bruker Corporation to determine the following integral values A to C of signals:

- Integral value A = signals at 37.2 to 40.4 ppm attributed to (OCOR, OCOR),
- Integral value B = signals at 40.4 to 41.8 ppm attributed to (OH, OCOR), and
- Integral value C = signals at 41.8 to 44.9 ppm attributed to (OH, OH).

Then, the integral values are used to calculate the block character ($\eta$) by the following equation:

$$\text{Block character } (\eta) = (\text{OH, OCOR})/[2(\text{OH})(\text{OCOR})]$$

wherein (OH, OCOR), (OH), and (OCOR) are calculated as follows:

- (OH, OCOR) = B,
- (OH) = (OH, OH) + (OH, OCOR)/2,
- (OCOR) = (OCOR, OCOR) + (OH, OCOR)/2.

(OH, OH) and (OCOR, OCOR) are calculated as follows:

- (OH, OH) = C
- (OCOR, OCOR) = A.

Measurement method of transparency of 4% PVA aqueous solution

A 4% aqueous solution of a PVA (A) was placed in a quartz cell with a 20 mm optical path length. The transmittance of the 4% aqueous solution of the PVA (A) was measured at 430 nm at 20°C using an ultraviolet-visible spectrometer (manufactured by JASCO Corporation; V-730). Pure water was used as a blank.

Measurement method of water-insoluble fraction of PVA

An amount of 10 g of a PVA (A) was dissolved in 500 g of water at 50°C for 1 hour with stirring to prepare an aqueous solution of the PVA (A). The weight of a wire mesh of 100 mesh was measured, and then the total amount of the aqueous solution of the PVA (A) was passed through the wire mesh to collect water-insoluble matter. The wire mesh used to collect the water-insoluble matter was dried at 110°C, and the weight of the dried wire mesh was measured. The percentage of the water-insoluble matter was calculated as follows: water-insoluble matter [%] = (B - A)/10 × 100. In this equation, A represents the weight of the wire mesh before the filtration, and B represents the weight of the wire mesh after the filtration.

Example 1

Synthesis of PVA-based polymer (B)

To 100 parts of a 50% solution of polyvinyl acetate with a degree of polymerization of 250 in methanol, 2.3 parts of a 3% solution of sodium hydroxide in methanol (0.3 mol relative to 100 mol of the monomer units of the polyvinyl acetate) and 1 part of water were added, and the mixture was thoroughly stirred to allow a saponification reaction to proceed at 40°C for 20 minutes. Then, 1.7 parts by weight of a 5% aqueous phosphoric acid solution (0.15 mol relative to 100 mol of the monomer units of the polyvinyl acetate) was added to terminate the saponification reaction. A homogeneous reaction solution was obtained. The solution was dried under a reduced pressure of 100 Pa at 60°C for 1 hour to give a PVA (B). The PVA (B) was analyzed and determined to have a degree of saponification of 35 mol%, an average degree of polymerization of 250, and a block character of 0.44. The PVA (B) was completely insoluble in water.

Synthesis of PVA-based polymer (A)

In 100 parts of methanol was dissolved 100 parts of the PVA (B) produced above to prepare a homogeneous solution. To this solution, 8.0 parts by weight of a 20% aqueous solution of sodium 2-formylbenzenesulfonate (hereinafter may be referred to as 2-FBS) (0.55 mol relative to 100 mol of the monomer units of the PVA-based polymer (B)) and 1.4 parts by weight of a 5% aqueous phosphoric acid solution (0.05 mol relative to 100 mol of the monomer units of the PVA-based polymer (B)) were added, and the mixture was thoroughly stirred. The homogeneous solution was dried under a reduced pressure of 100 Pa at 60°C for 1 hour (to evaporate off the solvent) to give a solid.

The solid was heated under a reduced pressure of 100 Pa at 150°C for 30 minutes to give a PVA (A). The PVA (A) was analyzed and determined to have a degree of saponification of 35 mol%, an average degree of polymerization of 250, and a block character of 0.46. The amount of 2-FBS introduced into the PVA (A) was 0.5 mol% per monomer unit of the PVA (A) as determined by $^1$H-NMR. The PVA (A) showed solubility in water, and a 4% solution of the PVA (A) had a transparency of 88%. The water-insoluble fraction was less than 0.1%. A 4% solution of the PVA (A) in DMSO had a YI of less than 1.

Examples 2 to 17 and Comparative Example 1

Various types of PVA-based polymers (A) shown in Table 1 were synthesized in the same manner as in Example 1 except that the degrees of polymerization and saponification of the PVA (B), the concentration and the solvent composition of the PVA (B) solution, the amount of 2-FBS added, the type of neutralizing agent, the type and amount of the catalyst for the synthesis of the PVA(A), the heating temperature, etc. were changed as appropriate.

The PVA (A) obtained in Comparative Example 1 showed considerable color development, and was not able to be dissolved in water or DMSO. Due to this, the transparency of a 4% aqueous solution of the PVA (A), the amount of water-insoluble matter, and the YI were not measurable.

Example 18

A different type of PVA (A) was produced in the same manner as in Example 1 except that the PVA (B) was not prepared as a solution but directly used as a solid.

Specifically, a powder mixture of the PVA (B) and sodium 2-formylbenzenesulfonate as shown in Table 1 was fed

to an extrusion molding machine for polymers (MiniLab III manufactured by Thermo Scientific), and mixed under heating with the conditions shown below to give a PVA (A).

- screw rotation speed: 100 rpm.
- heating (mixing) temperature: 150°C.
- heating (mixing) time: 30 minutes.

Example 19

A different type of PVA (A) was synthesized in the same manner as in Example 1 except that 4-formylbenzoic acid (4-FBA) was used instead of 2-FBS, and the feed amount of the 4-FBA was 0.4 mol%.

Example 20

A different type of PVA (A) was synthesized in the same manner as in Example 1 except that glyoxylic acid (feed amount: 0.4 mol%) was used instead of 2-FBS, and the phosphoric acid catalyst was not used.

The results and other information are summarized in Table 1 below.

[Table 1]

| Table 1 | Production of PBA (B) | | PVA (B) | | | Production of PVA-based polymer (A) | | | | | | | | PVA-based polymer (A) | | | | | | |
|---|---|---|---|---|---|---|---|---|---|---|---|---|---|---|---|---|---|---|---|---|
| | Saponi-fication catalyst | Neutralizing agent | Degree of polymeri-zation | Degree of saponifi-cation | Block charac-ter | Concen-tration of PVA (A) | Solvent | Catalyst | | Aldehyde | | Temp. | Time | Degree of polymeri-zation | Degree of saponifi-cation | Degree of modifica-tion | Transpar-ency of 4% solu-tion | Water in-soluble matter | YI | Block charac-ter |
| | | | | mol% | | % | Type | Type | meq | Type | mol% | °C | min | | mol% | mol% | % | % | 4% in DMSO | |
| Example 1 | NaOH | Phosphoric acid | 250 | 35 | 0.44 | 50 | Methanol | Phosphoric acid | 0.5 | 2-FBS | 0.55 | 150 | 30 | 250 | 35 | 0.5 | 88 | Less than 0.1 | Less than 1 | 0.46 |
| Example 2 | NaOH | Phosphoric acid | 250 | 65 | 0.41 | 50 | Methanol/water = 1/1 | Phosphoric acid | 0.5 | 2-FBS | 0.55 | 150 | 30 | 250 | 65 | 0.5 | 72 | Less than 0.1 | Less than 1 | 0.43 |
| Example 3 | NaOH | Phosphoric acid | 250 | 80 | 0.45 | 50 | Methanol/water = 1/1 | Phosphoric acid | 0.5 | 2-FBS | 0.55 | 150 | 30 | 250 | 80 | 0.5 | 95 | Less than 0.1 | Less than 1 | 0.47 |
| Example 4 | NaOH | Phosphoric acid | 500 | 35 | 0.43 | 40 | Methanol | Phosphoric acid | 0.5 | 2-FBS | 0.55 | 150 | 30 | 500 | 35 | 0.5 | 85 | Less than 0.1 | Less than 1 | 0.45 |
| Example 5 | NaOH | Phosphoric acid | 500 | 65 | 0.40 | 40 | Methanol/water = 1/1 | Phosphoric acid | 0.5 | 2-FBS | 0.55 | 150 | 30 | 500 | 65 | 0.5 | 70 | Less than 0.1 | Less than 1 | 0.42 |
| Example 6 | NaOH | Phosphoric acid | 500 | 80 | 0.45 | 40 | Methanol/water = 1/1 | Phosphoric acid | 0.5 | 2-FBS | 0.55 | 150 | 30 | 500 | 80 | 0.5 | 94 | Less than 0.1 | Less than 1 | 0.47 |
| Example 7 | NaOH | Phosphoric acid | 1500 | 25 | 0.45 | 30 | Methanol | Phosphoric acid | 0.5 | 2-FBS | 0.55 | 150 | 30 | 1500 | 25 | 0.4 | 75 | Less than 0.1 | Less than 1 | 0.47 |
| Example 8 | NaOH | Phosphoric acid | 250 | 35 | 0.44 | 50 | Methanol | Phosphoric acid | 0.5 | 2-FBS | 0.22 | 150 | 30 | 250 | 35 | 0.20 | 73 | Less than 0.1 | Less than 1 | 0.45 |
| Example 9 | NaOH | Phosphoric acid | 250 | 35 | 0.44 | 50 | Methanol | Phosphoric acid | 0.5 | 2-FBS | 6.00 | 150 | 30 | 250 | 35 | 5.0 | 83 | Less than 0.1 | Less than 1 | 0.48 |
| Example 10 | NaOH | Phosphoric acid | 250 | 35 | 0.44 | 50 | Methanol/methyl acetate/water = 1/1/1 | Phosphoric acid | 0.5 | 2-FBS | 0.55 | 150 | 30 | 250 | 35 | 0.50 | 87 | Less than 0.1 | Less than 1 | 0.46 |
| Example 11 | NaOH | Phosphoric acid | 250 | 35 | 0.44 | 50 | Methanol | Phosphoric acid | 1.0 | 2-FBS | 0.55 | 110 | 30 | 250 | 35 | 0.4 | 86 | Less than 0.1 | Less than 1 | 0.45 |
| Example 12 | NaOH | Phosphoric acid | 250 | 35 | 0.44 | 50 | Methanol | - | - | 2-FBS | 0.55 | 150 | 30 | 250 | 35 | 0.2 | 74 | Less than 0.1 | Less than 1 | 0.45 |
| Example 13 | NaOH | Phosphoric acid | 250 | 35 | 0.44 | 50 | Methanol | - | - | 2-FBS | 0.55 | 200 | 30 | 250 | 35 | 0.5 | 80 | 1 | 2 | 0.52 |
| Example 14 | NaOH | Phosphoric acid | 250 | 35 | 0.44 | 50 | Methanol | Acetic acid | 0.5 | 2-FBS | 0.55 | 150 | 30 | 250 | 35 | 0.3 | 73 | Less than 0.1 | Less than 1 | 0.45 |
| Example 15 | NaOH | Acetic acid | 250 | 35 | 0.44 | 50 | Methanol | Phosphoric acid | 0.5 | 2-FBS | 0.55 | 150 | 30 | 250 | 35 | 0.2 | 71 | 1 | 4 | 0.46 |
| Example 16 | NaOH | Acetic acid | 250 | 35 | 0.44 | 50 | Methanol | - | - | 2-FBS | 0.55 | 200 | 30 | 250 | 35 | 0.05 | 5 | 3 | 25 | 0.70 |
| Example 17 | NaOH | Phosphoric acid | 250 | 35 | 0.44 | 50 | Methanol | Phosphoric acid | 3 | 2-FBS | 0.55 | 150 | 30 | 250 | 35 | 0.5 | 67 | 5 | 13 | 0.60 |
| Comparative Example 1 | NaOH | Phosphoric acid | 250 | 35 | 0.44 | 50 | Methanol | Sulfuric acid | 0.5 | 2-FBS | 0.55 | 150 | 30 | 250 | 35 | Not measurable | | | | Not meas-urable |
| Example 18 | NaOH | Phosphoric acid | 250 | 35 | 0.44 | 50 | Not used | - | - | 2-FBS | 0.55 | 150 | 30 | 250 | 35 | 0.2 | 52 | 5 | 15 | 0.47 |
| Example 19 | NaOH | Phosphoric acid | 250 | 35 | 0.44 | 50 | Methanol | Phosphoric acid | 0.5 | 4-FBS | 0.40 | 150 | 30 | 250 | 35 | 0.3 | 20 | 1 | Less than 1 | 0.46 |
| Example 20 | NaOH | Phosphoric acid | 250 | 35 | 0.44 | 50 | Methanol | - | - | Glyoxylic acid | 0.40 | 150 | 30 | 250 | 35 | 0.3 | 65 | 2 | 5 | 0.46 |

Polymerization Example 1

Suspension polymerization of vinyl chloride

Suspension polymerization of vinyl chloride was performed by using the PVA-based polymer (A) prepared in Example 8 above as a dispersion aid as follows.

To a polymerization vessel (a pressure-resistant autoclave) with an internal volume of 100 L were added 0.05 parts by mass of a partially saponified polyvinyl alcohol (the degree of saponification: 80 mol%, the degree of polymerization: 2500) and 0.02 parts by mass of a partially saponified polyvinyl alcohol (the degree of saponification: 72 mol%, the degree of polymerization: 800) and were dissolved in 100 parts by mass of deionized water. Further, 0.75 parts by weight of the aqueous liquid (containing 4% by weight of the PVA-based polymer (A)) (0.03 parts by mass of PVA-based polymer (A)) prepared in Example 8 was added, and 0.05 parts by mass of t-butyl peroxyneodecanoate was added. After the vessel was degassed to an internal pressure of 40 mmHg, 100 parts by mass of vinyl chloride monomers were added to initiate polymerization. The polymerization temperature was set to 57°C, and this temperature was maintained until the end of the polymerization.

When the polymerization conversion reached 80%, the reaction was terminated. The unreacted monomers in the vessel were removed. The polymer slurry was discharged from the system, dehydrated, and dried to give a vinyl chloride resin. The evaluation methods of the vinyl chloride resin are described below.

Evaluation of vinyl chloride resin

The produced vinyl chloride resin was evaluated for average particle size, plasticizer absorption, and color development when formed in a sheet as described below.

Average particle size

The average particle size was determined by measuring the particle size distribution using a Ro-Tap sieve shaker (using a JIS sieve).

Plasticizer absorption

Glass fibers were packed in the bottom of a cylindrical container, and a produced resin was placed into the container. An excessive amount of dioctyl phthalate (abbreviated as DOP below) was added and left to stand for 30 minutes to allow DOP to infiltrate into the resin. The resin was centrifuged at 3000 rpm to remove excessive DOP. The weight of the resin was measured to calculate the amount of the DOP absorbed into 100 parts of the polymer. When the amount of DOP absorbed into the resin is larger, the resin has higher plasticizer absorption and more excellent molding processability.

Evaluation of color development in vinyl chloride polymer formed in a sheet

A mixture was prepared by blending 100 parts by weight of the vinyl chloride-based polymer, 50 parts by weight of di-2-ethylhexyl phthalate, 0.8 parts by weight of a dioctyltin mercapto-based stabilizer, 0.1 parts by weight of a polyethylene-based lubricant, and 0.8 parts by weight of a calcium/zinc-based one pack stabilizer. The mixture was kneaded with a test mixing roll at 160°C for 5 minutes to produce a sheet of 0.45 mm in thickness.

A plurality of the sheets were placed on top of another and pressed at 160°C for 5 minutes to produce a test piece of 40 mm × 40 mm × 15 mm (thickness). The test piece was used to measure a YI using a color difference meter.

Polymerization Examples 2 to 4

Suspension polymerization of vinyl chloride was performed in the same manner as in Polymerization Example 1 except that the PVAs (A) prepared in Examples 19, 20 and 16 each were used instead of the PVA (A) prepared in Example 8.

The evaluation results of the vinyl chloride resins are shown in Table 2 below.

[Table 2]

| | PVA used | PVA-based polymer (A) | | | | | Evaluation of vinyl chloride resin | | |
|---|---|---|---|---|---|---|---|---|---|
| | | Degree of polymerization | Degree of saponification | Aldehyde | Degree of modification | YI | Average Particle size | Plasticizer absorption | Color development in sheet |
| | | | mol% | Type | mol% | 4% in DMSO | μm | % | YI |
| Polymerization Example 1 | Example 8 | 250 | 35 | 2-FBS | 0.2 | Less than 1 | 145 | 23 | 18 |
| Polymerization Example 2 | Example 19 | 250 | 35 | 4-FBA | 0.3 | Less than 1 | 132 | 24 | 18 |
| Polymerization Example 3 | Example 20 | 250 | 35 | Glyoxylic acid | 0.3 | 5 | 137 | 24 | 19 |
| Polymerization Example 4 | Example 16 | 250 | 35 | 2-FBS | 0.05 | 25 | 144 | 23 | 28 |

INDUSTRIAL APPLICABILITY

The present invention provides a specific polyvinyl alcohol-based polymer. The polyvinyl alcohol-based polymer is suitable for use as a hot melt adhesive, a dispersing agent (a dispersion aid), etc.

**Claims**

1. A polyvinyl alcohol-based polymer (A) having an acetal skeleton having an ionic group, wherein a 4% by mass solution of the polyvinyl alcohol-based polymer (A) in dimethyl sulfoxide has a YI value of 10 or less.

2. A polyvinyl alcohol-based polymer (A) having an acetal skeleton having an ionic group, wherein a 4% by mass aqueous solution of the polyvinyl alcohol-based polymer (A) has a transparency of 2% or more at 430 nm at 20°C, and/or wherein the polyvinyl alcohol-based polymer (A) has a water-insoluble fraction of 20% by mass or less.

3. A polyvinyl alcohol-based polymer (A) having an acetal skeleton having an ionic group, wherein a 4% by mass solution of the polyvinyl alcohol-based polymer (A) in dimethyl sulfoxide has a YI value of 10 or less, wherein a 4% by mass aqueous solution of the polyvinyl alcohol-based polymer (A) has a transparency of 2% or more at 430 nm at 20°C, and/or wherein the polyvinyl alcohol-based polymer (A) has a water-insoluble fraction of 20% by mass or less.

4. The polyvinyl alcohol-based polymer (A) according to any one of claims 1 to 3, wherein the acetal skeleton having an ionic group comprises a skeleton represented by the following formula (1):

[Chem. 1]

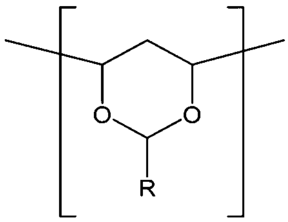

(1)

wherein R is a group having an ionic group.

5. The polyvinyl alcohol-based polymer (A) according to any one of claims 1 to 3, wherein the acetal skeleton having an ionic group comprises a skeleton represented by the formula (1) wherein R is a hydrocarbon group having an ionic group.

6. The polyvinyl alcohol-based polymer (A) according to any one of claims 1 to 3, wherein the acetal skeleton having an ionic group comprises at least one skeleton selected from a skeleton represented by the formula (1) wherein R is an ionic group and a skeleton represented by the following formula (1-1):

[Chem. 2]

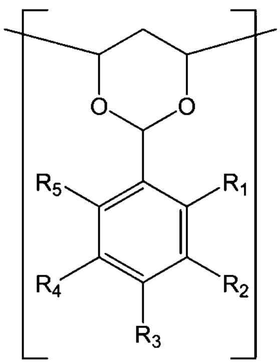

(1-1)

wherein $R_1$ to $R_5$ each represent a hydrogen atom or a substituent, wherein at least one of $R_1$ to $R_5$ is an ionic group.

**7.** The polyvinyl alcohol-based polymer (A) according to any one of claims 1 to 3, wherein the ionic group comprises at least one selected from acid groups and salts thereof.

**8.** The polyvinyl alcohol-based polymer (A) according to any one of claims 1 to 3, wherein the acetal skeleton having an ionic group comprises a skeleton derived from at least one selected from glyoxylic acid, 4-formylbenzoic acid, 2-formylbenzenesulfonic acid, and salts thereof.

**9.** The polyvinyl alcohol-based polymer (A) according to any one of claims 1 to 3, wherein the acetal skeleton having an ionic group is contained in an amount of 0.01 to 10 mol% per monomer unit.

**10.** The polyvinyl alcohol-based polymer (A) according to any one of claims 1 to 3, wherein the polyvinyl alcohol-based polymer (A) has a block character of 0.35 or more and less than 0.55.

**11.** The polyvinyl alcohol-based polymer (A) according to any one of claims 1 to 3, wherein the polyvinyl alcohol-based polymer (A) has a degree of saponification of 20 to 90 mol%.

**12.** The polyvinyl alcohol-based polymer (A) according to any one of claims 1 to 3, wherein the polyvinyl alcohol-based polymer (A) has a degree of saponification of 70 mol% or less.

**13.** The polyvinyl alcohol-based polymer (A) according to any one of claims 1 to 3, wherein the polyvinyl alcohol-based polymer (A) has a degree of polymerization of 120 to 3000.

**14.** The polyvinyl alcohol-based polymer (A) according to any one of claims 1 to 3, wherein a 4% by mass aqueous solution of the polyvinyl alcohol-based polymer (A) has a transparency of 40% or more at 430 nm at 20°C.

**15.** The polyvinyl alcohol-based polymer (A) according to any one of claims 1 to 3, wherein the polyvinyl alcohol-based polymer (A) has a water-insoluble fraction of 5% by mass or less.

**16.** A method for producing a polyvinyl alcohol-based polymer (A) having an acetal skeleton having an ionic group, the method comprising a heating step comprising heating a composition comprising a polyvinyl alcohol-based polymer (B) and a carbonyl compound having an ionic group.

**17.** The production method according to claim 16, wherein the method further comprises a solvent-removal step comprising, from a composition comprising a polyvinyl alcohol-based polymer (B), a carbonyl compound having an ionic group and a solvent, removing the solvent,
wherein the heating step is performed after the solvent-removal step, or is performed in parallel with the solvent-removal step or successively to the solvent-removal step.

**18.** The production method according to claim 16 or 17, wherein the composition further comprises at least one selected from phosphoric acid, a hydrogen phosphate salt, and acetic acid.

**19.** The production method according to claim 16 or 17, wherein the composition further comprises at least one selected from phosphoric acid, a hydrogen phosphate salt, and acetic acid in an amount of 0.005 to 0.3 mol% per monomer unit of the polyvinyl alcohol-based polymer (B).

**20.** The production method according to claim 16 or 17, wherein the heating step is performed at a heating temperature of 80 to 240°C.

**21.** The production method according to claim 16 or 17, wherein the heating step is performed for a heating time of 5 minutes to 5 hours.

**22.** The production method according to claim 17, wherein the solvent comprises at least one selected from water, an alcohol, and an ester.

**23.** The production method according to claim 17 or 22, wherein the solvent comprises methanol.

**24.** The production method according to claim 16 or 17, wherein the polyvinyl alcohol-based polymer (A) satisfies at least one requirement selected from the following (1), (2) and (3):

(1) a 4% by mass solution of the polyvinyl alcohol-based polymer (A) in dimethyl sulfoxide has a YI value of 10 or less,
(2) a 4% by mass aqueous solution of the polyvinyl alcohol-based polymer (A) has a transparency of 2% or more at 430 nm at 20°C, and
(3) the polyvinyl alcohol-based polymer (A) has a water-insoluble fraction of 20% by mass or less.

**25.** A hot melt adhesive comprising the polyvinyl alcohol-based polymer (A) according to any one of claims 1 to 3.

**26.** A dispersing agent for suspension polymerization, comprising the polyvinyl alcohol-based polymer (A) according to any one of claims 1 to 3.

## INTERNATIONAL SEARCH REPORT

International application No. **PCT/JP2023/046332**

### A. CLASSIFICATION OF SUBJECT MATTER

***C08F 8/28***(2006.01)i; ***C08F 16/06***(2006.01)i; ***C08F 16/38***(2006.01)i; ***C09J 129/14***(2006.01)i; ***C09K 23/52***(2022.01)i
FI: C08F8/28; C09J129/14; C09K23/52; C08F16/06; C08F16/38

According to International Patent Classification (IPC) or to both national classification and IPC

### B. FIELDS SEARCHED

Minimum documentation searched (classification system followed by classification symbols)

C08F8/28; C08F16/06; C08F16/38; C09J129/14; C09K23/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/159757 A1 (KURARAY CO., LTD.) 22 August 2019 (2019-08-22) claims, paragraphs [0020]-[0021], [0031], [0033]-[0035], [0041], [0048], [0061]-[0067] | 2-9, 11-13, 15-16, 20-21, 24-26 |
| A | | 1, 10, 14, 17-19, 22-23 |
| X | JP 63-218741 A (AISERO KAGAKU KK) 12 September 1988 (1988-09-12) p. 3, upper right column, line 12 to p. 3, lower left column, line 3 | 2-11, 13-16, 18, 21, 24 |
| A | | 1, 12, 17, 19-20, 22-23, 25-26 |
| X | JP 60-6707 A (HOECHST AG) 14 January 1985 (1985-01-14) claims, p. 2, upper left column, lines 7-16, p. 3, upper right column, lines 8-13, p. 4, upper right column, line 13 to p. 4, lower left column, line 3, p. 4, lower left column, line 20 to p. 4, lower right column, line 15, p. 5, lower left column, line 8 to p. 7, lower right column, line 13 | 1-7, 9-16, 20-21, 24-26 |
| A | | 8, 17-19, 22-23 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/046332**

| Patent document cited in search report | Publication date (day/month/year) | Patent family member(s) | Publication date (day/month/year) |
|---|---|---|---|
| WO 2019/159757 A1 | 22 August 2019 | US 2021/0002392 A1<br>claims, paragraphs [0022]-[0023], [0032], [0034]-[0050], [0056], [0062], [0079]-[0087]<br>EP 3753959 A1<br>TW 201936655 A | |
| JP 63-218741 A | 12 September 1988 | US 5135982 A<br>example 1<br>EP 283180 A2 | |
| JP 60-6707 A | 14 January 1985 | EP 128345 A2<br>DE 3316948 A1 | |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description

- WO 2019159757 A